Europäisches Patentamt

**European Patent Office**

**Office européen des brevets**

(19)

(11) Publication number: **0 177 265**
**A2**

# (12) EUROPEAN PATENT APPLICATION

(21) Application number: **85306829.4**

(22) Date of filing: **25.09.85**

(51) Int. Cl.⁴: **G 01 N 30/96**
**G 01 N 30/46**

(30) Priority: **04.10.84 US 658144**

(43) Date of publication of application:
**09.04.86 Bulletin 86/15**

(84) Designated Contracting States:
**DE FR GB IT**

(71) Applicant: **DIONEX CORPORATION**
**1228 Titan Way**
**Sunnyvale California 94086(US)**

(72) Inventor: **Pohl, Christopher Andrew**
**39240 Soquel**
**Union City California 94587(US)**

(74) Representative: **Allard, Susan Joyce et al,**
**BOULT, WADE & TENNANT 27 Furnival street**
**London EC4A 1PQ(GB)**

(54) **Flat membrane reactor device with structure in flow channel.**

(57) Membrane reagent addition device including a reagent compartment and an analyte compartment separated by a membrane sheet. Structure such as a screen or an analyte compartment wall with spaced projections is included in the analyte compartment and, preferably, in the reagent compartment serving to reduce noise and promote turbulence and to provide support to the flexible membrane. A sandwich reagent addition device includes a second membrane sheet opposite the first membrane sheet defining an analyte flow channel between the membranes to permit two different reagents to be added simultaneously to the analyte stream without prior mixing of the reagents.

EP 0 177 265 A2

-1-
# FLAT MEMBRANE REACTOR DEVICE WITH STRUCTURE IN FLOW CHANNEL

The present invention relates to the field of adding a reagent in a liquid reagent stream to a flowing analyte liquid stream, particularly the effluent from a chromatographic column. Reactor devices have been used to add reagents to analyte streams. One important system of this type uses post-column reactors to improve detection in liquid chromatography (HPLC). It is desirable for such a device to avoid band broadening due to post-column mixing volume resulting in loss of resolution. Inconsistency of reagent metering produces fluctuations in reagent concentration in the effluent leading to "noise" in the chromatogram developed by the detector. An effective post-column reactor is disclosed in U.S. Patent 4,474,664 which causes a constant relatively "pulseless" metering of reagent. The effluent of the chromatographic column is fed through the interior of a hollow fiber membrane while mobile reagent flows outside the fiber and permeates and is transported across the fiber wall into the interior of the fiber for reaction with the chromatographically resolved species in the analyte stream. The purpose of the reagent is to enhance the detectability of the analyte. While this device has good performance characteristics, the hollow fiber is not very durable. Also, it is relatively expensive and time consuming to construct a hollow fiber device of the type disclosed in that patent.

It is an object of the invention to provide an improved device for adding a reagent to an analyte stream which utilizes a membrane partition in relatively flat form.

It is a specific object of the invention to provide such a device capable of simultaneously adding two different reagents to an analyte stream without premixing the reagents.

In accordance with the invention, improved method and apparatus are provided for adding one or more reagents to an analyte stream using an improved membrane reagent addition device. The device includes at least one reagent compartment and at least one analyte compartment separated by a membrane sheet defining a reagent flow channel and an analyte flow channel on opposite sides of the membrane sheet. Bridging means is disposed in at least the analyte flow channel in the form and structure including continuous portions extending substantially the entire distance between the membrane sheet and the opposite analyte compartment wall. The structure defines a continuous convoluted liquid flow-through passage in the analyte flow channel. A detector is provided for detecting the reaction product of analyte and reagent. A suitable structure includes (a) a screen or (b) an analyte compartment wall with spaced projections extending towards the membrane in the form of a textured wall or the like. Preferably, additional bridging means of similar type is disposed in the reagent channel. The bridging means reduces noise, serves as a turbulence promoter in the system for effective mixing of analyte and reagent, and provides support to the flexible membrane to constant flow channels. In a particularly effective system, the analyte comprises sample species which have been previously resolved by ion chromatography or liquid chromatography.

In another embodiment, termed the "sandwich reagent addition device", a second membrane sheet is included opposite to the first membrane sheet defining therebetween the analyte flow channel. A second reagent compartment defining a flow-through channel is provided on the opposite side of the second membrane sheet from the analyte compartment. In this way, two different reagents can be added simultaneously to the analyte stream without prior mixing of the reagents.

Figure 1 is a schematic view of apparatus for performing chromatography or ion chromatography in which the reagent addition device of the present invention is used.

Figure 2 is an exploded view of a reagent addition device including two reagent flow channels and a central analyte flow channel, each including a screen.

Figure 3 is a side view of a reagent addition device illustrating effluent and regenerant flow channels in dotted lines.

Figure 4 is an exploded view of a reagent addition device including a single reagent flow channel and bridging means in the form of a textured wall.

Figure 5 is an enlarged portion of the textured wall, of Figure 6 taken in the area 5-5 of Figure 6.

Figure 6 is an assembled cross-section view of the device of Figure 3.

Figure 7 is an exploded view of a sandwich membrane reagent addition device with reagent textured walls and an analyte flow channel with a screen.

The system of the present invention is useful for any analytical system in which it is desired to add reagent to an analyte stream under substantially constant "pulseless" metering conditions. Thus, it is highly useful in adding reagent to chromatographically resolved species to improve their detectibility. The invention will be described with respect to ion chromatography, although it is also highly effective for liquid chromatography or any other system in which a liquid reagent is to be added to a flowing liquid analyte stream. In ion chromatography, a large number of ionic species are resolved so long as the species to be determined are solely anions or solely cations. Suitable samples include surface waters, and other liquids such as industrial chemical wastes, body fluids, beverages such as fruits and wines and drinking water.

When the term "ionic species" is used herein, it includes species in ionic form and components of molecules which are ionizable under the conditions of the present system.

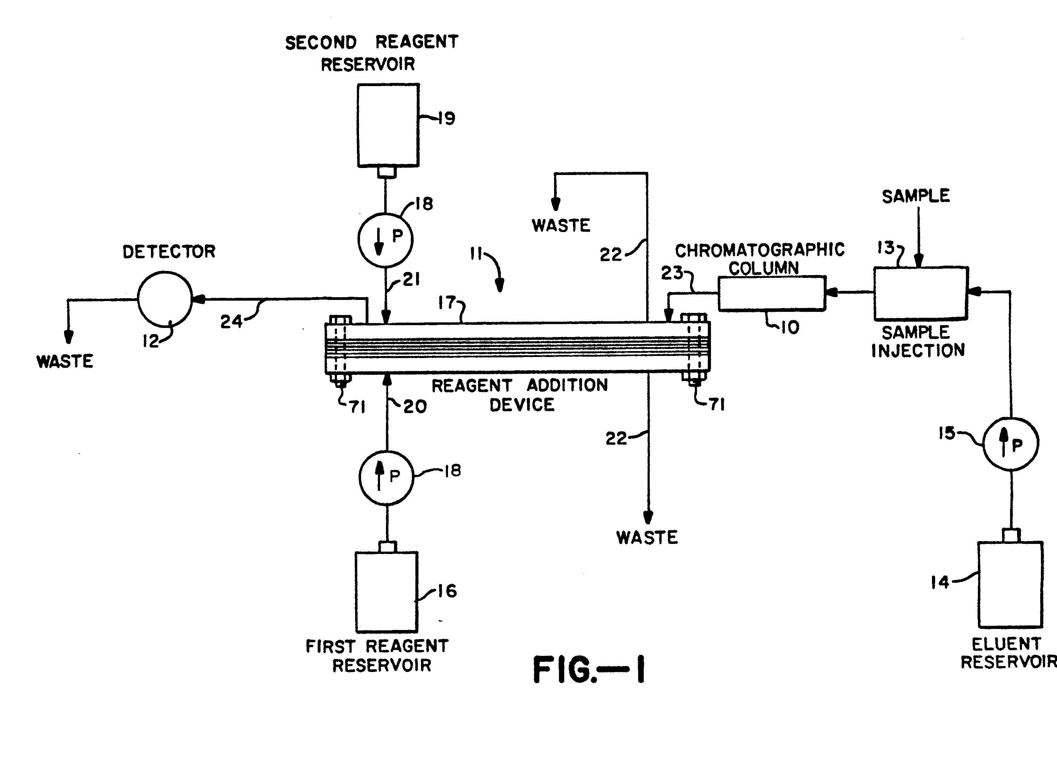

Referring to Figure 1, a simplified apparatus is illustrated for performing ion chromatography (without suppression) using the reagent addition device of the present invention as a post-column reactor for improvement of detectibility of the resolved ionic species (the analyte) in the eluent (the analyte stream). The system includes chromatographic separation means, typically in the form of a chromatographic column 10 which is packed with a chromatographic separation medium. In one embodiment referred to above, such medium is in the form of ion-exchange resin. In another embodiment, the separation medium is a porous hydrophobic chromatographic resin with essentially no permanently attached ion-exchange sites. This system is used for mobile phase ion chromatography (MPIC) as described in U.S. Patent No. 4,265,634. An ion exchange site-forming compound, including hydrophobic portion and an ion-exchange site, is passed through the column and is reversibly adsorbed to the resin to create ion-exchange sites.

Arranged in series with column 10 is membrane reagent additive means 11 serving to add one or more reagents to the eluent from column 10.

The effluent from means 11 is directed to a detector in the form of an ultraviolet detector, a visible light spectrophotometer, a photon counter, a fluorometer, electrochemical detector such as an amperometric detector or the like for detecting the resolved ionic species therefrom. A suitable sample is supplied through sample injection valve 13 which is passed through the apparatus in the solution of eluent from eluent reservoir 14 drawn by pump 15, and then pass through the sample injection valve 13. The solution leaving column 10 is directed to reagent additive device 11 wherein the reagent is added to the ionic species, typically to enhance their detectibility by a detector. The effluent with separated ionic species of enhanced detectibility are then detected by detector 12.

Device 11 includes a reagent reservoir 16 or other source of a reagent stream which is directed to at least one flow-through reagent channel in membrane reagent additive device 17. Means 11 will be described in detail hereinafter. Reagent from first and second reservoirs 16 and 19, respectively, flow in a reagent stream through chromatographic pumps 18 through two different conduits 20 and 21, respectively, to supply the reagent to the reagent flow-though passages and then to waste through conduits. The effluent flows from chromatographic column 10 to membrane device 17 through conduit 23, and from the membrane device to the conductivity detector through conduit 24. As described below, this system permits independent simultaneous addition of two different reagents to the effluent stream without prior mixing.

Sandwich Membrane Reagent Additive Device

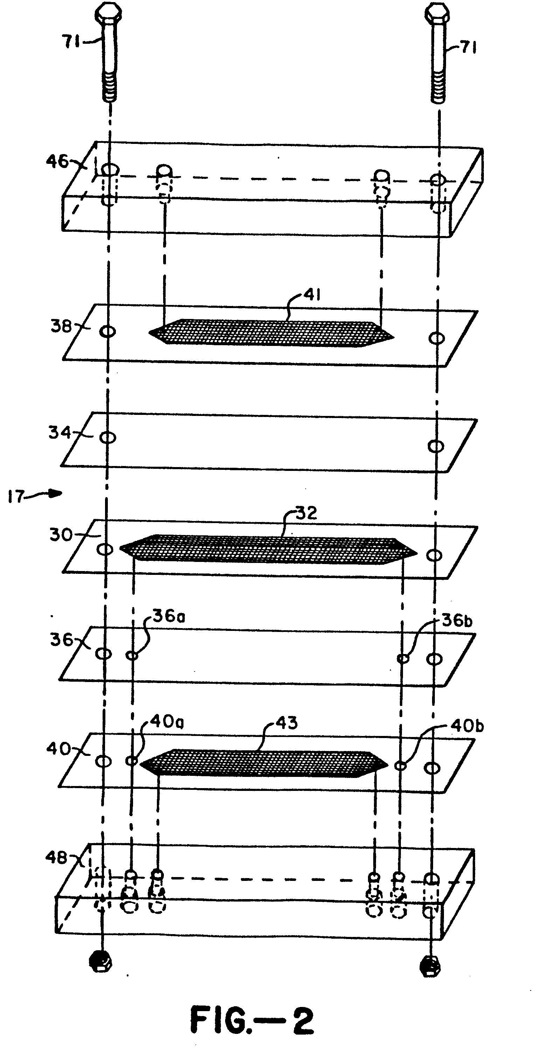

Referring to Figures 2-5, a device is illustrated in the form of a sandwich membrane reagent additive device including a central effluent (analyte stream) flow channel defined on both sides by membranes to the exterior of which are two reagent stream flow channels.

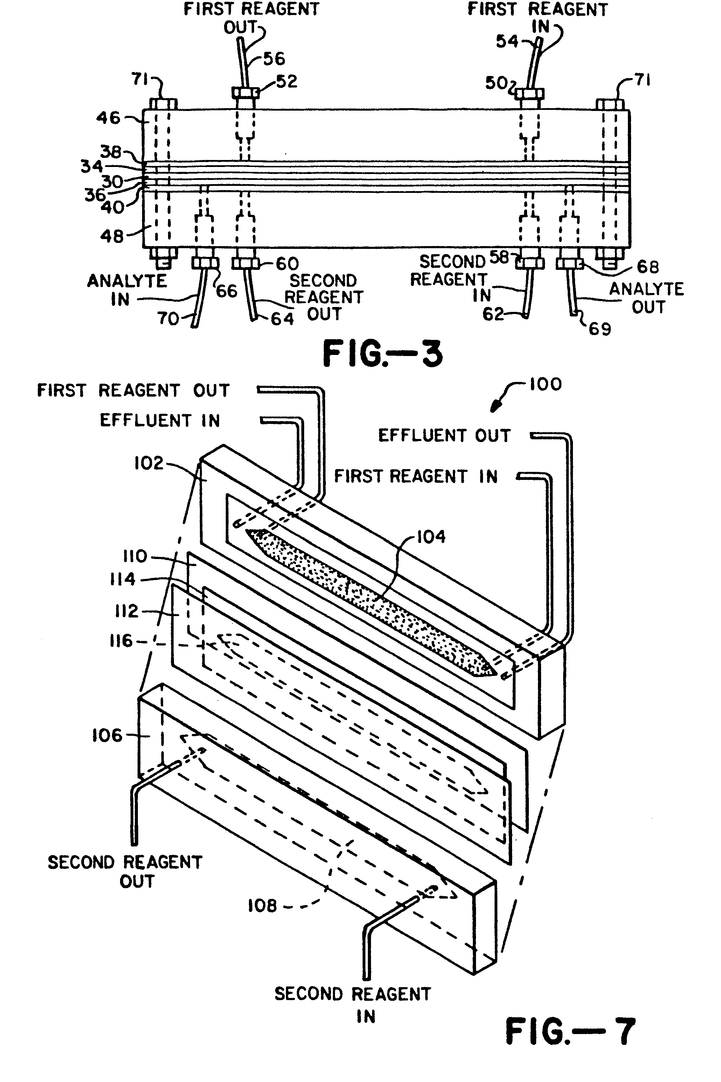

Referring specifically to Figures 2 and 3, membrane device 17 is illustrated which includes a central effluent flow channel flanked by reagent flow channels. Membrane device 17 includes means defining an effluent flow channel in the form of an effluent compartment, partially bounded by an effluent compartment, partially bounded by an effluent gasket 30 defining a central cavity. To minimize dead space in the cavity it is preferable to form both ends of the flow channels in a peak or V-shape. Bridging means is disposed suitably in the form of effluent screen 32, to be described more fully below. Membrane sheets 34 and 36 are mounted to extend along opposite sides of effluent screen 32 and, together with gasket 30, define the outer perimeter of the effluent flow channel. Openings 36a and 36b are provided for effluent inlet and outlet to the effluent flow channel.

Reagent flow stream gaskets 38 and 40 are mounted to the facing surfaces of membrane sheets 34 and 36, respectively and define regenerant flow channels. Bridging means may be provided in the reagent flow channels in the form .of screens 41 and 43, respectively. Openings 40a and 40b are provided for inlet and outlet effluent flow through gasket 40. To simplify connections with the external flow lines, it is preferable to form the effluent flow channel slightly longer than the flanking regenerant flow channels.

External support blocks 46 and 48 are formed of a rigid material, such as polymethylmethacrylate, and serves to provide structural support for the remainders of membrane device 17. Referring to Figure 3, fittings 50 and 52 are provided for reagent stream inlet and outlet lines 54 and 56, respectively. Similarly, fittings 58 and 60 are provided for reagent stream inlet and outlet lines 62 and 64, respectively. Fittings 66 and 68 are provided for effluent inlet and outlet lines 70 and 69, respectively. The fittings may be mounted to the support blocks by any conventional means such as mating screw threads.

The above assembled sheets and gaskets are mounted under pressure applied by bolts 71 to form liquid-tight seals. Also, by use of such pressure in combination with appropriate sizing of the screen (or other bridging means described below) in comparison to the flow channel dimensions, the screen extends substantially the entire distance across the flow channels and contacts the membranes resulting in minimizing band broadening while enhancing mixing. The lines to the effluent and regenerant flow channels are illustrated for countercurrent flow, although concurrent flow may also be used.

Effluent gasket 30 may be formed of any suitable material which provides a liquid seal for the effluent flow channel which it defines. A suitable material for the gasket is a flexible liquid silicon-based rubber such as supplied under the name RTV by General Electric Co. or a plastic sheet such as "Parafilm" supplied by American Can Co. A similar material may be used for regenerant gaskets 38 and 40.

Bridging means, illustrated as effluent screen 32 in the embodiment of Figures 2 and 3, is a significant feature of the present invention and serves a number of important functions. Effluent screen 32 may be formed integral with effluent gasket 30 or may be inserted independently into the effluent flow channel.

A screen integral with the surrounding gasket material may be formed by cutting a gasket from plastic sheet to include the desired flow path and pressing this gasket into a rectangular piece of screen such that only the flow path is not covered by the gasketing material.

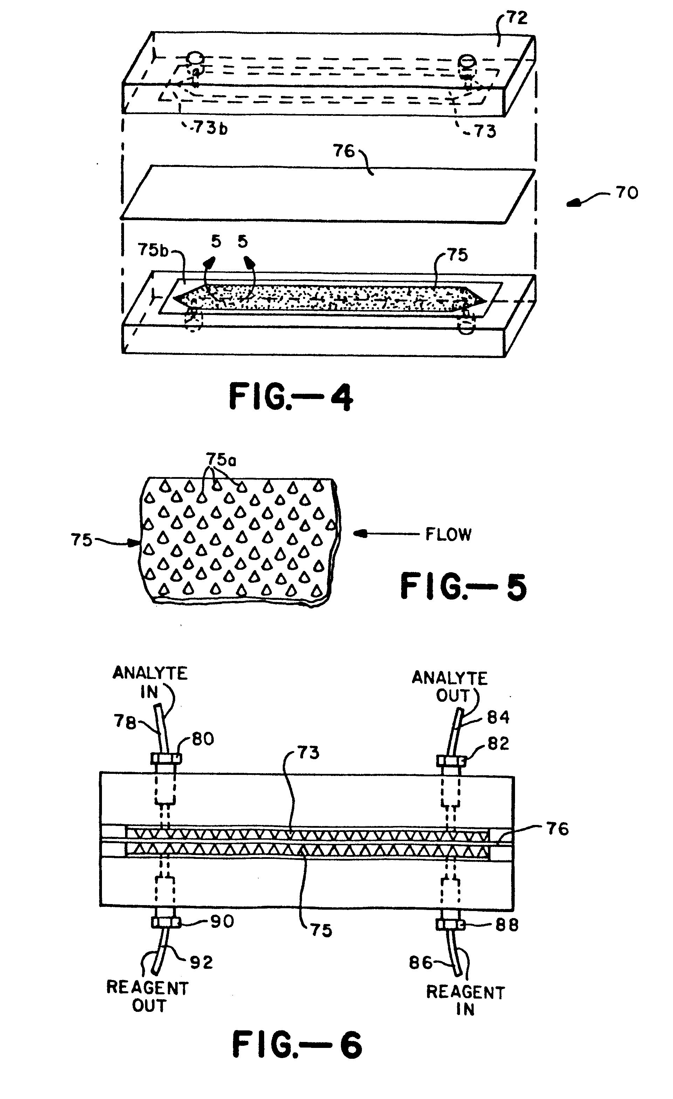

Reagent screens 41 and 43 may be formed in the same manner as set forth with respect to effluent screen 32. The effluent bridging means includes continuous portions which extend substantially the entire distance across the effluent flow channel transverse to flow. In the embodiment of Figures 2 and 3, this distance extends between membrane sheets 34 and 36. In the alternate embodiment of Figures 6-8 described below, only one membrane separates one regenerant flow channel from the effluent flow channel. There, the transverse distance spanned by the bridging means is from the membrane to the opposite wall defining the effluent flow channel. The bridging means defines a continuous convoluted flow-through passageway in the effluent flow channel along substantially the entire length of the membrane. This creates turbulence and thus increasing the efficiency of mixing and also minimize band broadening. The physical configuration of the screen may vary so long as its bridging function and turbulence-producing function is accomplished. Thus, the screen may be provided with a weaving pattern either perpendicular or diagonal to the direction of flow. Also, the fibers may be smooth or contain protrusions such as bumps. The bridging means may also be in other forms, such as a textured block, as described below.

The following parameters are relevant to the screen's function; weave patterns, orientation of weave pattern to flow, ion exchange capacity, mesh, and percentage of open area relative to volume. Several weaves may be used including twill, twill square, half-leno, dutch weave and, preferably, plain square weave. With plain square weave, the warp and weft threads are woven in a simple over and under pattern. The over and under pattern is preferred since it produces a turbulent path for liquid flow transversely as well as laterally and longitudinally. As set forth above, the square weave preferably is oriented approximately 45° to the direction of liquid flow causes the liquid to be dispersed to the outer walls of the gasketed chamber (covering more membrane surface) in a shorter time than in the case where the weave is originated 90° to flow. Interplay is present among these parameters since the product of the mesh and the surface area determines the volume of liquid in the flow channel.

A suitable membrane is of the general type described in U.S. Patent 4,474,664, but in a flat form. The membrane may be formed of a polymer such as polyepropylene as supplied under the trademark Celgard 3501 or 5511 by Celanese Corp. Typical porosities are on the order of 45%.

In one mode of operation of device 11, effluent from chromatographic column 10 is directed through the effluent flow channel bounded on both sides by membranes 34 and 36 partitioning the reagent from the effluent. The reagent stream flows through the regenerant channels. The membrane is selected to be of a pore size large enough to pass the reagent components. The reagent stream is under a higher pressure than the analyte stream so that a net pressure is applied from the reagent channel across the membrane into the effluent channel to cause flow of reagent across the membrane. A suitable pressure difference is about 5 to 50 psi.

The reagent streams are illustrated as flowing from the reagent flow channel to waste. In a preferred alternative mode, the reagent stream outlet is closed off to conserve reagent. In this mode, fresh reagent is continuously supplied to the reagent flow channel for transport across the membrane by the pressure differential between the reagent and analyte streams.

Bridging means, illustrated as effluent screen 32, and reagent screens 41 and 43, serve to reduce band broadening and increase the effectiveness of mixing. The threads of the screen preferably extend substantially across the effluent flow channel transverse to flow to contact both membranes. In the illustrated device, the effluent screen extends the distance between membranes 34 and 36. This may be accomplished effectively by forming the effluent screen integral with the effluent gasket wall and dimensioning the spacing between the two membrane sheets to be approximately equal to the screen thickness. The gaskets and membranes are relatively flexible and compressible. Thus, by applying appropriate pressure to the rigid support blocks, this distance between the membranes may be adjusted to the desired extent.

A significant advantage to the sandwich type of membrane reagent additive device which includes two reagent flow channels flanking a central analyte flow channel is that two different reagents may be added simultaneously to the analyte stream without prior reagent mixing. This is particularly important when the reagents are reactive with each other to form a reaction product which would interfere with the desired reaction product of both reagents with the analyte.

While the above sandwich device embodiment includes two analyte flow channels, the system is also applicable to the use of a single reagent flow channel separated from the effluent flow channel by a single membrane.

Referring to Figures 4-6, another embodiment of membrane reagent additive device 70 is illustrated using a different form of bridging means and using a single reagent flow channel. Device 70 is illustrated using a different form of bridging means and using a single reagent flow channel. It includes upper rigid support block 72 with effluent flow channel wall 73 and lower support 74 with reagent flow channel wall 75, separated by a membrane 76 of the type described above.

The effluent flows into the membrane reagent additive device through effluent inlet 78, fitting 80 and flows along effluent flow channel defined by wall 73 through fittings 82 and out effluent outlet line 84. Similarly, reagent solution flows from inlet line 86 through fittings 88 across the regenerant flow channel defined by wall 75, out fitting 90 and through regenerant outlet 92 to waste. The device of Figures 4-6 is used in the overall system of Figure 1 in place of the device of Figure 3.

The particular bridging means of this embodiment is significantly different from that of the screen. Walls 73 and 75 are each textured to provide spaced projections which define a convoluted path for the flow of liquid through the respective flow channels. Referring to the reagent flow channel, an expanded view of such projections is illustrated in Figure 5.

One suitable texturing technique is based upon computer generated artwork and is described in Example 1.

Referring to Figures 4-6, the continuous portion of walls 73 and 75 are depressed below the external perimeter wall surfaces 73b and 75b, respectively. When the support blocks 72 and 74 are pressed towards each other, projections 75a (and the analogous projections 73a, not shown), continuously extend substantially the entire distance across the respective flow channels and, preferably, contact membrane 76 on opposite sides of the membrane. In the illustrated embodiment, the projections are in the form of truncated cones. Other types of projections (e.g. cylinders or cubes) may also be employed so long as they provide a convoluted path for the liquid and extend adjacent to the membrane opposite the support wall and, preferably, contact the membrane. The projections preferably form an array of Pascal triangles with the triangular point facing the flow path. Walls 73 and 75 may be formed of the same materials as the screens described above and may be functionalized in the same manner.

The liquid flows through the channels formed by the spacing among the projections. The dimensions of the projections and spacing is selected to provide the desired frequency of contacts with the flowing reagent to increase their mobility across the membrane and to create sufficient turbulence for increased mixing efficiency.

Suitable eluent solutions for anion ion chromatography include alkali hydroxides, such as sodium hydroxide, alkali carbonates and bicarbonates, such as sodium carbonate, alkali borates, such as sodium borate, combinations of the above, and the eluent systems of the aforementioned patents.

Suitable eluent solutions for cation ion chromatography include mineral acids such as nitric acid, hydrochloric acid, amines such as m-phenylenediamine.2 HCl, combinations thereof, and organic chelating agents such as oxalate, citrate or tartrate.

Suitable reagents include 4-(2-pyridylazo) resorcinol which increases detectability of metals by absorbance, O-phthalaldehyde which increases detectibility of amino acids by fluorescence and by luminol which increases detectibility by chemiluminescence/photon counting of chelating agents.

Referring to Figure 7, a sandwich device is illustrated which uses a combination of a textured wall bridging means in both reagent channels and a screen bridging means in the effluent channel. Membrane reagent additive device 100 includes an upper rigid support block 102 with a texturized reagent flow channel wall 104 and a lower support block 106 with a texturized reagent flow channel wall 108, both of the same type described with respect to the embodiment of Figures 4-6. Membranes 110 and 112, of the same type as membranes 42 and 44 of Figures 2 and 3, are disposed adjacent to reagent channel walls 104 and 108, respectively. Sandwiched between membranes 110 and 112 is an effluent gasket 114 defining an effluent flow channel in which is disposed an effluent screen 116, of the type described with respect to the gasket 30 and screen 32 of Figures 2 and 3. Also included are reagent and eluent inlets and outlets (not shown) and clamping means (not shown) which serve to compress the support blocks toward each other.

The invention encompasses variations in the above system. For example, other forms of continuous bridging means may be employed. Also, instead of ion chromatography or HPLC, the system is also useful for any flow injection analysis (FIA) or continuous flow analysis (CFA) system without any separation of analyte components.

In order to illustrate the present invention, the following examples of its practice are provided.

Example 1

A textured block for use in the invention is formed as follows: a two-dimensional geometric pattern forms the desired three-dimensional convoluted path as computer generated art work. This art work is photographically reduced to the desired dimensions of the texturing required performance. The background (white area between the black markings of the geometric pattern) is chemically etched into a magnesium block using photosensitive resist of the type commonly used in the circuit-board industry. The etched block is incorporated into a larger block so that a silicone rubber mold can be made which is the negative of the etched block. A textured epoxy block (a positive of the art work) is made from the rubber mold.

Example 2

A gasketed screen is formed as follows: rectangles are cut from the screen diagonal to the weave, 2.5 cm x 18 cm. For each gasket, two rectangles of Parafilm (American Can Co. Greenwich, CT) cut with the appropriate dimension of the flow chamber cut out. The screen is sandwiched between the Parafilm gasket and the stack is pressed approximately 5,000 psi at ambient temperature.

Example 3

This example illustrates the use of a membrane reagent addition device using two textured blocks separated by a single membrane of the polypropylene type (Celgard 3501 supplied by Celanese Corp. The analyte stream (including chromatographically separated ions in an eluent) flows through one of the channels formed between the textured block and the membrane while reagent is supplied to the other channel with a clamped outlet line. A positive pressure differential of 15 psi is maintained from the reagent channel to the analyte channel to assure that the reagent is supplied to the flowing analyte stream.

The sample $Cu^{2+}$ (2 ppm), $Co^{2+}$, (2 ppm), $Zn^{2+}$, (2 ppm), and $Ni^{2+}$ (4 ppm) carried in an eluent (0.055$\underline{M}$ oxalic acid and 0.020$\underline{M}$ sulfate pH 4.9 with lithium hydroxide) through an ion chromatography separator column of the type AS4 p/n 35311 supplied by Dionex Corporation of Sunnyvale, California. The effluent from the separator column is directed through the analyte flow channel while post-column reagent (0.0002 M 4-(2-pyridylazo)-resorcinol in 3 M $NH_4OH$ and 1 M $CH_3COOH$, 0.8 ml/min.) is directed through the reagent flow channel.

Detection was on a visible region spectrophotometer at a wavelength of 520 nm, 0.1 AUFS. The system provided excellent peak symmetry and efficiency.

Example 4

In this example, a dual reagent addition system was used in combination with an ion chromatography column. The system included a textured block design of the foregoing type with two membranes and a central channel including a screen.

In this instance, amino acids (glycine and lysine), both at the 10 nanomolar concentration are directed in an eluent of 10mM NaOH at 1.0 ml/min. The separator was of the same type as set forth in Example 2. The separated amino acids are directed from the ion chromatography column to the central channel of the above reagent addition device. Reagent 1(10mM luminol, 20mM hydrogen peroxide, 35mM potassium hydroxide) is directed through one reagent channel of the device. In the other reagent channel, reagent 2 (100 nanomolar cobalt (II) chloride at pH 3 with HCl is directed through the other channel of the device. Both reagent channels are clamped at the exit end. Thereafter, the post-column separated amino acids which have been derivatized in the dual reagent channeled device are detected by a photon counter of the photomultiplier type.

It is noted that cobalt-luminol produces light while amino acid-luminol product does not. The amount of amino acid is quantified by counting photons of light emitting from the total system. However, reagents 1 and 2 are incompatible for prior mixing so that they must be separate until reaction with the analyte. Thus, the present system provides the ability to accomplish this objective.

This dual textured block design permits increased signal-to-noise ratios through its pulse dampening effects and better mixing relative to conventional post-column derivatization hardware. The chemical reactions should be fast enough to occur within the residence time of the device.

Example 5

In this example the membrane addition device consists of two textured blocks separated by a single membrane forming one reagent channel and one analyte channel. The sample comprises 100 ppb $Co^{2+}$ in a carrier or receiver solution of $H_2O$ at 1.0 ml/min. The reagent addition device is of the type described in Example 3. The reagent in the reagent addition device is $2 \times 10^{-4}$ M 4-(2-pyridylazo) - resorcinol in 3 $\underline{M}$ $NH_4$ OH and 1 M $CH_3COOH$, 0.8 ml/min.

The reagent reacts with the cobalt to render it detectable by UV/VIS. A Dionex UV/VIS detector is utilized.

CLAIMS:

1. Apparatus for adding a reagent in a mobile reagent stream to a liquid analyte stream, the apparatus comprising a pressurized analyte stream source, a pressurized reagent stream source, a substantially flat membrane reagent additive device including at least one reagent stream compartment means communicating with the reagent stream source and at least one analyte stream compartment means communicating with the analyte stream source, a membrane sheet partitioning the reagent stream compartment means and analyte stream compartment means and defining therewith a reagent stream flow channel and an analyte stream flow channel, respectively, the reagent stream compartment means and analyte stream compartment means each including walls opposed to and extending coextensively with the membrane sheet, the membrane sheet being permeable to mobile reagent flowing in the reagent stream flow channel, bridging means disposed in the analyte stream flow channel comprising a structure including continuous portions extending substantially across the analyte stream flow channel, the structure defining continuous convoluted liquid flow-through passages in the analyte stream flow channel along the bridging means, and detector means suitable for detecting the reaction product of the analyte and reagent, the detector means communicating with the analyte stream flow channel to receive the reaction product therefrom.

2. Apparatus as claimed in claim 1 in which the structure comprises a screen.

3. Apparatus as claimed in claim 2 in which the screen comprises a woven fiber fabric.

4. Apparatus as claimed in claim 2 in which the fibers of the screen are perpendicular to each other and are oriented at approximately 45$^{\circ}$ to the direction of fluid flow in the effluent flow channel.

5. Apparatus as claimed in any one of the preceding claims in which another bridging means is disposed in the reagent stream flow channel.

6. Apparatus as claimed in claim 1 in which the bridging means comprise spaced projections on the analyte stream compartment means wall extending towards the membrane.

7. Apparatus as claimed in any one of the preceding claims further comprising a second membrane sheet of the same type as the one membrane sheet, the one and second membrane sheets defining therebetween the analyte stream channel, a second reagent stream compartment means, including a wall opposed to and extending coextensively with the second membrane sheet and defining therewith a second reagent stream flow channel disposed on the opposite side of the second membrane sheet from the analyte stream flow channel.

8. Apparatus for ion chromatography or liquid chromatography comprising an eluent reservoir, chromatographic separating means in communication with the reservoir for receiving eluent therefrom, the separating means comprising a separating medium adapted to chromatographically separate dissolved species of a sample eluted therethrough in an eluent, and a substantially flat reagent additive device including at least one reagent liquid compartment means and at least one effluent compartment means, a membrane sheet partitioning the reagent and effluent compartment means and defining therewith a reagent flow channel and an effluent flow channel, respectively, the reagent compartment means and effluent compartment means each including walls opposed to and extending coextensively with the membrane sheet, the membrane sheet being permeable to mobile reagent flowing in the reagent flow channel, bridging means disposed in the effluent flow channel comprising a structure including continuous portions extending substantially across the effluent flow channel, the structure defining continuous convoluted liquid flow-through passages in the effluent flow channel along the bridging means, and detector means suitable for detecting chromatographically resolved species and communicating with the effluent flow channel to receive the treated effluent therefrom.

9.  A method of reacting an analyte in a liquid analyte stream with a first mobile reagent in a liquid reagent stream comprising flowing the analyte stream under pressure through the analyte stream flow channel of a reactor additive device including an analyte stream flow channel separated by a flat membrane sheet from a reagent stream flow channel with bridging means disposed in the effluent flow channel comprising a structure including continuous portions extending across said channel transverse to liquid flow, and simultaneously flowing the first reagent stream under pressure into the reagent channel, the reagent stream being under higher pressure than the analyte stream, the membrane being permeable to the first mobile reagent so that mobile reagent flows under pressure from said reagent flow channel across said membrane into said analyte stream flow channel.

10. A method as claimed in claim 9 in which the structure comprises a screen.

11. A method as claimed in claim 9 in which the screen comprises a woven fiber fabric.

12. A method as claimed in claim 9 in which the fibers of the screen are perpendicular to each other and are oriented of approximately $45^{\circ}$ to the direction of fluid flow in the effluent flow channel.

13. A method as claimed in any one of claims 9 to 12 in which another bridging means is disposed in the reagent flow channel.

14. A method as claimed in claim 9 in which the bridging means comprise spaced projections on the analyte stream compartment means wall extending towards the membrane.

15. A method as claimed in any one of claims 9 to 14 in which a second membrane sheet defines the analyte channel and the one membrane sheet and a reagent stream with a second reagent different from the first reagent is directed through a second reagent channel in contact with the second membrane sheet.

16. A method of ion chromatography or liquid chromatography comprising eluting a sample containing species ions to be quantitated dissolved in an eluent through a chromatographic separating medium effective to chromatographically separate the dissolved

- 23 -

0177265

species, thereafter flowing the effluent eluting from the separating medium under pressure through the effluent flow channel of a membrane reactor additive device including an effluent flow channel separated by a membrane sheet from a reagent flow channel with bridging means disposed in the effluent flow channel comprising a structure including continuous portions extending across the channel transverse to the liquid flow, and simultaneously flowing the reagent stream under pressure into the reagent channel, the reagent stream being under higher pressure than the analyte stream, the membrane being permeable to the mobile reagent so that mobile reagent flows from the reagent flow channel across the membrane into the effluent flow channel.

FIG.—1

FIG.—2

FIG.—3

FIG.—7

0177265

0177265

FIG.—4

FIG.—5

FIG.—6